# FASCICULE DE BREVET EUROPEEN

(11) **EP 2 577 876 B1**
(45) Date de publication et mention de la délivrance du brevet: **25.03.2015**
(21) Numéro de dépôt: 11791999.3
(22) Date de dépôt: 07.06.2011
(51) Int. Cl.: H04B 1/715, H04B 1/7156

(54) **PROCEDE ET RESEAU DE TRANSMISSION DE L'INFORMATION ENTRE UNE PLURALITE DE STATIONS RADIOELECTRIQUES**
VERFAHREN UND NACHRICHTENSENDENETZWERK ZWISCHEN EINER VIELZAHL RADIOELEKTRICHEN STATIONEN
METHOD AND NETWORK FOR TRANSMITTING INFORMATION BETWEEN A PLURALITY OF RADIOELECTRIC STATIONS

(30) Priorité: 07.06.2010 FR 1002395
(43) Date de publication de la demande: 10.04.2013
(73) Titulaire: THALES, 92200 Neuilly-sur-Seine (FR)
(72) Inventeur: DELTOUR, Bruno, F-92704 Colombes Cedex (FR); SINGLAS, Yves, F-92704 Colombes Cedex (FR); CHANTELOUVE, Jean-Baptiste, F-92704 Colombes Cedex (FR)
(74) Mandataire: Blot, Philippe Robert Emile
(86) Numéro de dépôt international: PCT/FR2011/051284
(87) Numéro de publication internationale: WO 2011/154651

(56) Documents cités:
- Pascale Minet , C edric Adjih , Paul Muhlethaler , Philippe Jacquet: "Routage Dynamique sur Liens HF", , 1 décembre 2006 (2006-12-01), page 44 PP, XP002621683, France ISSN: 0249-6399 Extrait de l'Internet: URL:http://hal.inria.fr/docs/00/12/13/08/P DF/RR-6071.pdf [extrait le 2011-02-01]
- KOSKI E: "Concepts for A Reliable Multicast Data Link Protocol for HF Radio Communications", MILITARY COMMUNICATIONS CONFERENCE, 2005. MILCOM 2005. IEEE ATLANTIC CITY, NJ, USA, 17 octobre 2005 (2005-10-17), - 1 février 2000 (2000-02-01), pages 1-7, XP010901601, IEEE, PISCATAWAY, NJ, USA DOI: 10.1109/MILCOM.2005.1605761 ISBN: 978-0-7803-9393-6

## Description

La présente invention concerne un procédé de transmission de l'information entre une pluralité de stations radioélectriques d'un même réseau, chaque station comportant un émetteur et un récepteur, le procédé comprenant :
- un premier mode de transmission de données, dans lequel le réseau fonctionne en évasion de fréquences dans un premier plan de fréquences, la fréquence utilisée pour la transmission de données étant conservée durant un palier EVF, et changeant d'un palier EVF à l'autre selon une loi de changement de fréquences,
- un deuxième mode de transmission de données dans un deuxième plan de fréquences, dans lequel une station émettrice parmi la pluralité de stations émet des données sur une fréquence fixe à destination d'une station réceptrice parmi la pluralité de stations, le deuxième mode comportant une étape de détermination de la fréquence fixe, l'étape de détermination comprenant l'émission d'un mot de test sur chaque fréquence du deuxième plan de fréquences durant un palier de test respectif.

La présente invention concerne un réseau de transmission comprenant une pluralité de stations radioélectriques, chaque station comportant un émetteur et un récepteur, chaque station étant propre à transmettre des données selon un premier mode dans lequel le réseau fonctionne en évasion de fréquences dans un premier plan de fréquences, la fréquence utilisée pour la transmission de données étant conservée durant un palier EVF et changeant d'un palier EVF à l'autre selon une loi de changement de fréquences, chaque station étant propre à transmettre des données dans un deuxième plan de fréquences selon un deuxième mode dans lequel une station émettrice parmi la pluralité de stations émet des données sur une fréquence fixe à destination d'une station réceptrice, chaque station comportant des moyens de détermination de la fréquence fixe, les moyens de détermination étant propres à commander l'émission d'un mot de test sur chaque fréquence du deuxième plan de fréquences durant un palier de test respectif.

On connaît un procédé de transmission du type précité. La norme STANAG-4444 décrit une structure temporelle comportant un premier TS1 et un second TS2 intervalles de temps (de l'anglais Time Slot), avec une alternance permanente entre ces deux intervalles de temps lorsque le réseau de transmission est en veille. Le premier intervalle TS1 est obligatoirement affecté à un mode de transmission en évasion de fréquences de la norme STANAG-4444. Le second intervalle TS2 peut être affecté à tout mode de transmission, notamment à un autre mode de transmission en fréquence fixe, comme le prévoit la norme STANAG 4538 décrivant l'utilisation combinée de la norme STANAG-4444 et de normes relatives à la transmission en fréquence fixe, telle que la norme MIL-STD-188-141.

Le mode de transmission en évasion de fréquences, appelé mode EVF, est généralement utilisé pour une transmission de l'information en conférence entre toutes les stations, et le mode de transmission en fréquence fixe est prévu pour la transmission de données en haut débit jusqu'à 19200 bits par seconde, le mode EVF présentant un débit de transmission limité à 2400 bits par seconde.

Toutefois, la durée du passage d'un mode de transmission à l'autre est particulièrement longue, ce qui est contraignant pour l'utilisateur qui évite alors de passer d'un mode à l'autre, mais profite moins des avantages offerts par chacun des modes de transmission.

Le but de l'invention est donc de proposer un procédé de transmission permettant d'utiliser facilement les deux modes de transmission, en utilisant le mode de transmission le mieux adapté aux caractéristiques d'un service désiré, le service étant par exemple une communication en phonie, une transmission de quelques mots de données, ou une transmission d'une quantité importante de données.

A cet effet, l'invention a pour objet un procédé de transmission du type précité, caractérisé en ce que la durée du palier de test est égale à la durée du palier EVF multipliée par un facteur entier, la valeur du facteur entier étant comprise entre 1 et 6.

Suivant d'autres modes de réalisation, le procédé de transmission comprend une ou plusieurs des caractéristiques suivantes, prises isolément ou suivant toutes les combinaisons techniquement possibles :
- la durée du palier de test est égale à la durée du palier EVF, le facteur multiplicatif étant égal à 1 ;
- le deuxième mode de transmission de données comporte en outre une étape de vérification par la station émettrice de la disponibilité de la station réceptrice, l'étape de vérification précédant l'étape de détermination de la fréquence fixe ;
- l'étape de détermination de la fréquence fixe comprend l'émission d'un mot d'appel par la station émettrice à destination de la station réceptrice, puis l'émission d'un mot de réponse par la station réceptrice à destination de la station émettrice, le mot d'appel et le mot de réponse étant émis sur chaque fréquence du deuxième plan de fréquences, la fréquence déterminée étant la fréquence présentant la meilleure qualité de réception du mot d'appel et du mot de réponse ;
- la station émettrice émet des données à destination de la station réceptrice sur une première fréquence fixe, et la station réceptrice émet des données à destination de la station émettrice sur une deuxième fréquence fixe ;
- la première fréquence fixe est la fréquence présentant la meilleure qualité de réception du mot d'appel, et la deuxième fréquence fixe est la fréquence présentant la meilleure qualité de réception du mot de réponse ;
- la deuxième fréquence fixe est de valeur distincte de celle de la première fréquence fixe ;
- la deuxième fréquence fixe est de valeur identique à celle de la première fréquence fixe ;
- le premier mode de transmission présente un premier débit maximal de transmission, et le deuxième mode de transmission présente un deuxième débit maximal de transmission de valeur supérieure à celle du premier débit maximal ; et
- la station émettrice et la station réceptrice retournent automatiquement dans le premier mode de transmission à l'issue de la transmission des données selon le deuxième mode de transmission.

L'invention a également pour objet un réseau de transmission du type précité, caractérisé en ce que la durée du palier de test est égale à la durée du palier EVF multipliée par un facteur entier, la valeur du facteur entier étant comprise entre 1 et 6.

Ces caractéristiques et avantages de l'invention apparaîtront à la lecture de la description qui va suivre, donnée uniquement à titre d'exemple non limitatif, et faite en référence aux dessins annexés, sur lesquels :
- la figure 1 est une représentation schématique d'un émetteur-récepteur d'un réseau de transmission selon l'invention,
- la figure 2 est une représentation d'un canal synchrone lorsque le réseau de transmission est en communication dans un premier mode de transmission,
- la figure 3 est une représentation du canal synchrone et d'un canal asynchrone, lorsque le réseau de transmission est en veille générale dans le premier mode de transmission,
- la figure 4 est un organigramme d'un procédé de transmission de l'information selon l'invention comportant le premier mode de transmission et un deuxième mode de transmission, et
- la figure 5 est un organigramme représentant le deuxième mode de transmission.

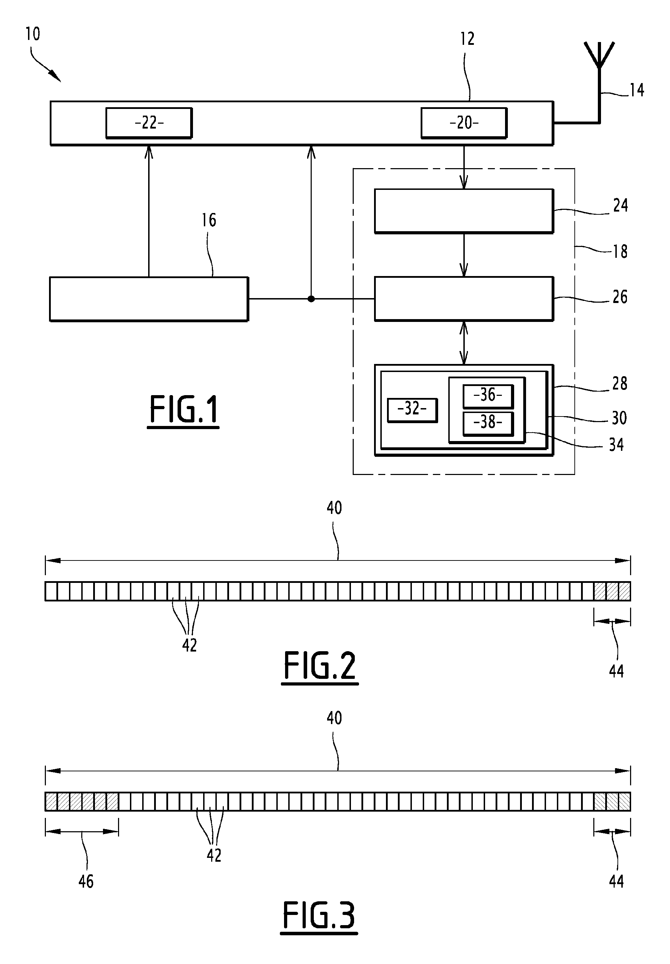

Un réseau de transmission selon l'invention comporte une pluralité de stations radioélectriques 10 et est propre à fonctionner en évasion de fréquences et en fréquence fixe. Une station est illustrée sur la figure 1.

L'ensemble des fréquences utilisables par le réseau de transmission comporte un premier plan de fréquences, appelé par la suite plan EVF, pour le fonctionnement en évasion de fréquences et un deuxième plan de fréquences pour le fonctionnement en fréquence fixe. Les premier et deuxième plans de fréquences appartiennent, par exemple, au domaine des hautes fréquences, également appelé domaine HF, compris entre 1,5 MHz et 30 MHz. Les premier et deuxième plans de fréquences sont, par exemple, des plans de fréquences prédéterminés. Les premier et deuxième plans de fréquences sont, par exemple, identiques. En variante, le deuxième plan de fréquences est distinct du premier plan. Les premier et deuxième plans de fréquences seront respectivement appelés par la suite plan EVF et plan ALE (de l'anglais Automatic Link Establishment).

Le réseau de transmission est, par exemple, un réseau présentant un débit de transmission inférieur à 20 kbits par seconde.

Le nombre de stations radioélectriques 10 est, par exemple, supérieur ou égal à trois, chaque station 10 étant propre à émettre des données en conférence aux autres stations 10 du réseau.

Chaque station 10 comprend, de façon connue en soi et comme représenté sur la figure 1, une chaîne d'émission-réception 12, une antenne 14, un synthétiseur de fréquence 16 et une unité de traitement 18.

La chaîne d'émission-réception 12 est reliée à l'antenne d'émission-réception 14, au synthétiseur de fréquence 16 et à l'unité de traitement 18, le synthétiseur de fréquence 16 et l'unité de traitement 18 étant également reliés entre eux.

La chaîne d'émission-réception 12 comporte un dispositif 20 de réception des signaux radioélectriques issus de l'antenne 14 et un dispositif 22 d'émission de signaux radioélectriques vers l'antenne 14. La chaîne d'émission-réception 12 est propre à être pilotée de façon connue par le synthétiseur de fréquence 16.

L'unité de traitement 18 comporte un convertisseur analogique numérique 24 connecté en sortie du dispositif de réception 20 de la chaîne d'émission-réception, un microprocesseur 26 connecté en sortie du convertisseur analogique numérique 24, et une mémoire 28 reliée au microprocesseur 26.

Le convertisseur analogique numérique 24 est propre à transformer le niveau de tension ou de courant fourni par le dispositif de réception 20 en échantillons numériques de signal transmis au microprocesseur 26.

Le microprocesseur 26 est relié au synthétiseur de fréquence 16 et à la chaîne d'émission-réception 12 pour l'émission de signaux radioélectriques à destination d'autres émetteurs-récepteurs 10 du réseau de transmission.

La mémoire 28 comporte un logiciel 30 de transmission de l'information à destination des autres stations 10.

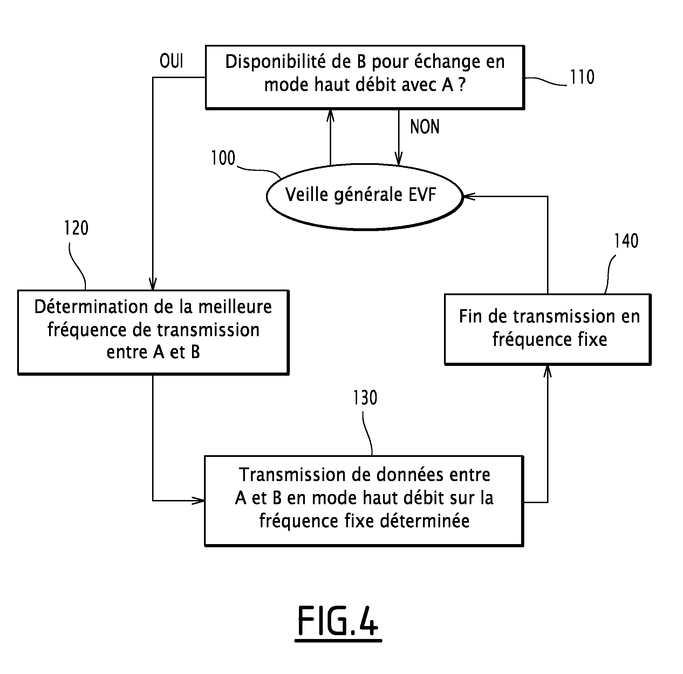

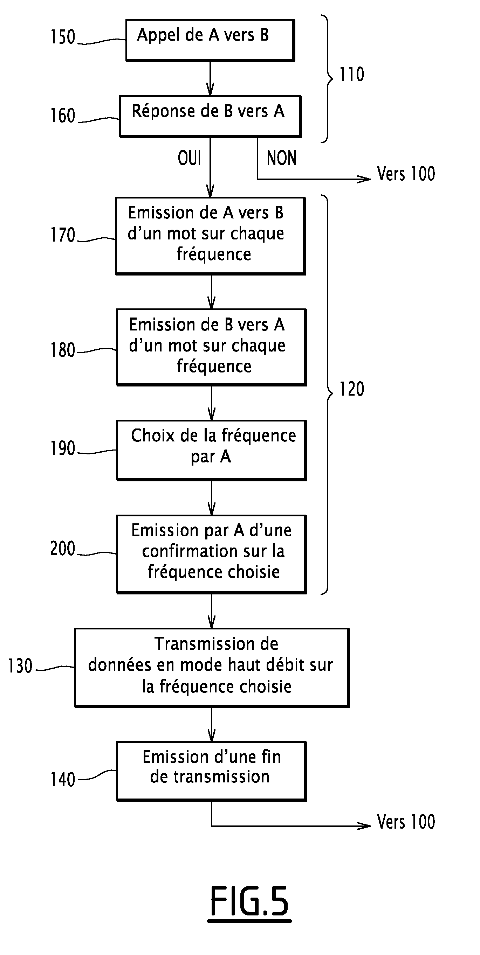

Le logiciel de transmission 30 comporte une première fonction 32 de transmission de données selon un premier mode de transmission, appelé mode EVF, dans lequel le réseau fonctionne en évasion de fréquences dans le premier plan de fréquences. Le logiciel de transmission 30 comporte également une deuxième fonction 34 de transmission de données selon un deuxième mode de transmission de données dans le deuxième plan de fréquences, dans lequel la station 10, dite alors station émettrice, est propre à émettre des données sur une fréquence fixe à destination d'une autre station 10 parmi la pluralité de stations, dite alors station réceptrice. La deuxième fonction de transmission 34 comporte une séquence 36 de vérification par la station émettrice de la disponibilité de la station réceptrice et une séquence 38 de détermination de la fréquence fixe. Le logiciel de transmission 30 sera décrit plus en détail par la suite en regard des figures 4 et 5.

En variante, les moyens de transmission de l'information sont réalisés sous forme de composants logiques programmables, ou encore sous forme de circuits intégrés dédiés.

Sur les figures 2 et 3, conformément à la norme STANAG-4444, la trame de transmission en mode EVF est découpée en intervalles de service 40, chaque intervalle de service 40 comportant quarante-huit paliers 42, appelés paliers EVF. Le mode EVF est un mode de transmission dans lequel les stations 10 fonctionnent en évasion de fréquences aléatoire, c'est-à-dire dans un mode de transmission où les informations sont portées sur les paliers 42 de durée déterminée. La fréquence utilisée pour la transmission de l'information est conservée durant un palier 42, et change d'un palier 42 à l'autre selon une loi de changement de fréquences, également appelée loi de saut EVF. La durée d'un palier EVF 42 est égale à 112,5 ms, et la durée de l'intervalle de service 40 est donc égale à 5,4 s.

Lorsque le réseau de transmission est en communication en mode EVF, c'est-à-dire lorsqu'une station maître de la synchronisation entre les stations 10 du réseau transmet des données, l'intervalle de service 40, visible sur la figure 2, comporte un canal synchrone 44 correspondant aux trois derniers paliers 42 de l'intervalle de service, et les autres paliers de l'intervalle de service 40 sont utilisés pour la transmission des données correspondant à la communication en cours.

Lorsque le réseau de transmission est en veille générale en mode EVF, c'est-à-dire lorsque la station maître n'est pas en communication, l'intervalle de service 40 comporte le canal synchrone 44 et un canal asynchrone 46, comme représenté sur la figure 3. Le canal synchrone 44 correspond aux trois derniers paliers 42 de l'intervalle de service, et le canal asynchrone 46 correspond, par exemple, aux six premiers 42 de l'intervalle de service.

Le procédé de transmission de l'information va être à présent décrit en regard des figures 4 et 5, la figure 5 illustrant le deuxième mode de transmission en particulier.

Lors de l'étape 100, la station 10 est en veille générale dans le premier mode de transmission (mode EVF), la station maître du réseau n'étant pas en communication, et alors susceptible de passer dans le deuxième mode de transmission, également appelé mode haut débit, si l'utilisateur a besoin de transmettre une quantité importante de données à une autre station 10. Lors de l'étape 100, le logiciel de transmission 30 exécute la première fonction 32, et est susceptible d'appeler la deuxième fonction 34.

Le premier mode de transmission présente un premier débit maximal de transmission, par exemple égal à 2400 bits par seconde, et le deuxième mode de transmission présente un deuxième débit maximal de transmission de valeur supérieure à celle du premier débit maximal. La valeur du deuxième débit maximal est, par exemple, au moins deux fois supérieure, de préférence au moins quatre fois supérieure, de préférence encore au moins huit fois supérieure, à la valeur du premier débit maximal. La valeur du deuxième débit maximal est, par exemple, égale à 19200 bits par seconde, ou encore à 9600 bits par seconde.

Lorsque la station 10, dite station émettrice A, souhaite transmettre des données en mode haut débit, elle commence par vérifier lors de l'étape 110 la disponibilité de l'autre station 10, dite station réceptrice B, pour un échange de données en mode haut débit, la deuxième fonction 34 de la station A appelant la séquence de vérification 36. Si la station réceptrice B est disponible, alors la deuxième fonction 34 passe à l'étape 120, sinon la station A retourne à l'étape 100 en veille générale EVF, où le logiciel de transmission 30 lance à nouveau la première fonction 32.

Après vérification de la disponibilité de la station réceptrice B, les stations A et B quittent la conférence EVF du premier mode de transmission, et la station émettrice A débute l'étape 120 de détermination de la meilleure fréquence de transmission entre A et B. A cet effet, la deuxième fonction 34 de la station A appelle la séquence de détermination 38.

Lorsque les stations A et B ont déterminé la meilleure fréquence de transmission, elles se transmettent alors lors de l'étape 130 des données en mode haut débit sur la fréquence fixe déterminée. Plus précisément, la station émettrice A émet des données à destination de la station réceptrice B sur une première fréquence fixe, et la station réceptrice B émet des données à destination de la station émettrice A sur une deuxième fréquence fixe. Dans l'exemple de réalisation des figures 4 et 5, la première fréquence fixe et la deuxième fréquence fixe ont une valeur identique. En variante, la deuxième fréquence fixe est de valeur distincte de celle de la première fréquence fixe.

La transmission de données en mode haut débit et en fréquence fixe est effectuée suivant des protocoles standards, tel que le protocole défini par la norme STANAG-4539, ou encore le protocole ARQ défini par la norme STANAG-5066.

Lorsque deux stations A et B se transmettent des données selon le deuxième mode, les autres stations se transmettent des données en conférence EVF selon le premier mode.

A l'issue de la transmission de données en mode haut débit, la station émettrice A envoie automatiquement un mot de fin de transmission à la station réceptrice B lors de l'étape 140, et les deux stations A et B retournent alors automatiquement à l'étape 100 en veille générale EVF. Les deux stations A et B communiquent à nouveau avec les autres stations en conférence EVF. Autrement dit, la station émettrice A et la station réceptrice B retournent automatiquement dans le premier mode de transmission à l'issue de la transmission des données selon le deuxième mode de transmission.

Les étapes de vérification de la disponibilité 110 et de détermination de la fréquence fixe 120 vont être à présent décrites plus en détail à l'aide de la figure 5.

L'étape de vérification 110 comporte une étape 150 d'envoi par la station émettrice A d'un mot d'appel spécifique à destination de la station réceptrice B, indiquant son intention d'établir une communication en mode haut débit. Sur réception de l'appel, la station réceptrice B émet une confirmation de réception à destination de la station A lors de l'étape 160 dans le cas où elle accepte la communication en mode haut débit. Sinon, la station réceptrice B ne répond pas, et la station A, ne recevant pas de confirmation, interrompt la procédure, et retourne en veille générale EVF (étape 100).

Cette étape de vérification 110 permet ainsi de vérifier la présence et la disponibilité de la station réceptrice B, sans devoir attendre la fin de l'étape de détermination de la fréquence fixe 120.

L'étape de détermination de la fréquence fixe 120 comporte alors une étape 170 d'émission par la station émettrice A d'un mot d'appel sur chacune des fréquences du plan ALE durant un palier de test respectif. La durée du palier de test est égale à la durée du palier EVF 42 multipliée par un facteur entier, la valeur du facteur entier étant comprise entre 1 et 6. Dans l'exemple de réalisation des figures 4 et 5, la durée du palier de test est égale à la durée du palier EVF 42, le facteur multiplicatif étant égal à 1. Autrement dit, la durée du palier de test est égale à 112,5 ms.

L'ordre de test des fréquences est prédéterminé, et est, par exemple, tiré aléatoirement. La station réceptrice B mesure la qualité de réception du mot d'appel sur chacune des fréquences.

L'étape de détermination 120 comporte ensuite une étape 180 d'émission par la station réceptrice B d'un mot de réponse sur chacune des fréquences du plan ALE durant un palier de test respectif.

Lorsque la première fréquence fixe et la deuxième fréquence fixe ont une valeur identique tel que représenté dans l'exemple de réalisation des figures 4 et 5, la station réceptrice B indique alors à la station émettrice A, dans chaque mot de réponse, la qualité de réception de la fréquence courante. La station émettrice A détermine alors lors de l'étape 190 la fréquence fixe unique en retenant la fréquence présentant la meilleure qualité de réception du mot d'appel et du mot de réponse.

En variante, lorsque la première fréquence fixe et la deuxième fréquence fixe ont des valeurs distinctes, la station réceptrice B indique dans chaque mot de réponse à la station émettrice A la fréquence présentant la meilleure qualité de réception du mot d'appel. La première fréquence fixe est alors la fréquence présentant la meilleure qualité de réception du mot d'appel, et la deuxième fréquence fixe est la fréquence présentant la meilleure qualité de réception du mot de réponse.

La station émettrice A émet enfin lors de l'étape 200 un mot de confirmation sur la fréquence fixe déterminée.

Ainsi, le procédé de transmission selon l'invention présente une étape de détermination de la fréquence fixe dont la durée est réduite, puisque l'étape de détermination 120 présente une durée inférieure à 3.5 secondes dans l'exemple d'un deuxième plan de fréquences comportant dix fréquences, alors qu'une étape de détermination de la meilleure fréquence fixe selon les normes MIL-STD-188-141A ou STANAG 4538 (FSLU ou RLSU) présente, dans le même exemple d'un deuxième plan de fréquences comportant dix fréquences, une durée égale à environ 100 secondes selon la norme MIL-STD-188-141A ou à environ 54 secondes selon la norme STANAG 4538. En effet, l'étape de détermination dure environ 10 secondes, respectivement environ 5,4 secondes, par fréquence testée selon la norme MIL-STD-188-141A, respectivement selon la norme STANAG 4538.

Le procédé de transmission selon l'invention offre les avantages d'un mode de transmission en conférence EVF, tels que la synchronisation des stations du réseau, la phonie diffusée à l'ensemble du réseau, l'entrée tardive dans le réseau, ou encore l'appel prioritaire (de l'anglais break-in), tout en permettant un passage rapide en mode haut débit lorsque deux stations souhaitent s'échanger une quantité importante de données.

Le procédé de transmission est en outre très facile à utiliser d'un point de vue opérationnel, car il ne nécessite pas d'intervention de l'utilisateur autre que l'exécution de l'envoi de données vers le destinataire.

On conçoit ainsi que le procédé de transmission selon l'invention permet de réduire la durée du passage du mode EVF au mode de transmission en fréquence fixe, et réciproquement, et facilite ainsi l'utilisation combinée de ces deux modes de transmission.

## Revendications

1. Procédé de transmission de l'information entre une pluralité de stations radioélectriques (10) d'un même réseau, chaque station (10) comportant un émetteur (22) et un récepteur (20), le procédé comprenant :
- un premier mode de transmission de données, dans lequel le réseau fonctionne en évasion de fréquences dans un premier plan de fréquences, la fréquence utilisée pour la transmission de données étant conservée durant un palier EVF, et changeant d'un palier EVF à l'autre selon une loi de changement de fréquences,
- un deuxième mode de transmission de données dans un deuxième plan de fréquences, dans lequel une station émettrice (A) parmi la pluralité de stations (10) émet des données sur une fréquence fixe à destination d'une station réceptrice (B) parmi la pluralité de stations (10), le deuxième mode comportant une étape (120) de détermination de la fréquence fixe, l'étape de détermination (120) comprenant l'émission d'un mot de test sur chaque fréquence du deuxième plan de fréquences durant un palier de test respectif,
**caractérisé en ce que** la durée du palier de test est égale à la durée du palier EVF multipliée par un facteur entier, la valeur du facteur entier étant comprise entre 1 et 6.

2. Procédé selon la revendication 1, dans lequel la durée du palier de test est égale à la durée du palier EVF, le facteur multiplicatif étant égal à 1.

3. Procédé selon la revendication 1 ou 2, dans lequel le deuxième mode de transmission de données comporte en outre une étape (110) de vérification par la station émettrice (A) de la disponibilité de la station réceptrice (B), l'étape de vérification (110) précédant l'étape de détermination de la fréquence fixe.

4. Procédé selon l'une quelconque des revendications précédentes, dans lequel l'étape de détermination de la fréquence fixe (120) comprend l'émission d'un mot d'appel par la station émettrice (A) à destination de la station réceptrice (B), puis l'émission d'un mot de réponse par la station réceptrice (B) à destination de la station émettrice (A), le mot d'appel et le mot de réponse étant émis sur chaque fréquence du deuxième plan de fréquences, la fréquence déterminée étant la fréquence présentant la meilleure qualité de réception du mot d'appel et du mot de réponse.

5. Procédé selon l'une quelconque des revendications précédentes, dans lequel la station émettrice (A) émet des données à destination de la station réceptrice (B) sur une première fréquence fixe, et dans lequel la station réceptrice (B) émet des données à destination de la station émettrice (A) sur une deuxième fréquence fixe.

6. Procédé selon les revendications 4 et 5 prises ensemble, dans lequel la première fréquence fixe est la fréquence présentant la meilleure qualité de réception du mot d'appel, et la deuxième fréquence fixe est la fréquence présentant la meilleure qualité de réception du mot de réponse.

7. Procédé selon la revendication 5 ou 6, dans lequel la deuxième fréquence fixe est de valeur distincte de celle de la première fréquence fixe.

8. Procédé selon la revendication 5 ou 6, dans lequel la deuxième fréquence fixe est de valeur identique à celle de la première fréquence fixe.

9. Procédé selon l'une quelconque des revendications précédentes, dans lequel le premier mode de transmission présente un premier débit maximal de transmission, et le deuxième mode de transmission présente un deuxième débit maximal de transmission de valeur supérieure à celle du premier débit maximal.

10. Procédé selon l'une quelconque des revendications précédentes, dans lequel la station émettrice (A) et la station réceptrice (B) retournent automatiquement dans le premier mode de transmission à l'issue de la transmission des données selon le deuxième mode de transmission.

11. Réseau de transmission comprenant une pluralité de stations radioélectriques (10), chaque station (10) comportant un émetteur (22) et un récepteur (20), chaque station (10) étant propre à transmettre des données selon un premier mode dans lequel le réseau fonctionne en évasion de fréquences dans un premier plan de fréquences, la fréquence utilisée pour la transmission de données étant conservée durant un palier EVF et changeant d'un palier EVF à l'autre selon une loi de changement de fréquences, chaque station (10) étant propre à transmettre des données dans un deuxième plan de fréquences selon un deuxième mode dans lequel une station émettrice (A) parmi la pluralité de stations (10) émet des données sur une fréquence fixe à destination d'une station réceptrice (B), chaque station (10) comportant des moyens de détermination de la fréquence fixe, les moyens de détermination étant propres à commander l'émission d'un mot de test sur chaque fréquence du deuxième plan de fréquences durant un palier de test respectif,
**caractérisé en ce que** la durée du palier de test est égale à la durée du palier EVF multipliée par un facteur entier, la valeur du facteur entier étant comprise entre 1 et 6.

## Patentansprüche

1. Verfahren zum Übertragen von Informationen zwischen einer Mehrzahl von Funkstationen (10) eines selben Netzes, wobei jede Station (10) einen Sender (22) und einen Empfänger (20) aufweist, wobei das Verfahren umfasst:
- einen ersten Datenübertragungsmodus, bei dem das Netz im Frequenzsprungverfahren in einem ersten Frequenzplan arbeitet, wobei die für die Datenübertragung verwendete Frequenz während einer Frequenzsprungphase beibehalten wird und von einer Frequenzsprungphase zur anderen gemäß einem Frequenzänderungsgesetz geändert wird,
- einen zweiten Datenübertragungsmodus in einem zweiten Frequenzplan, bei dem eine Sendestation (A) der Mehrzahl von Stationen (10) Daten auf einer festen Frequenz an eine Empfangsstation (B) der Mehrzahl von Stationen (10) sendet, wobei der zweite Modus einen Schritt (120) der Bestimmung der festen Frequenz umfasst, wobei der Bestimmungsschritt (120) das Senden eines Testwortes auf jeder Frequenz des zweiten Frequenzplans während einer jeweiligen Testphase umfasst,
**dadurch gekennzeichnet, dass** die Dauer der Testphase gleich der Dauer der Frequenzsprungphase multipliziert mit einem ganzzahligen Faktor ist, wobei der Wert des ganzzahligen Faktors zwischen 1 und 6 liegt.

2. Verfahren nach Anspruch 1, bei dem die Dauer der Testphase gleich der Dauer der Frequenzsprungphase ist, wobei der Multiplikationsfaktor gleich 1 ist.

3. Verfahren nach Anspruch 1 oder 2, bei dem der zweite Datenübertragungsmodus außerdem einen Schritt (110) der Überprüfung der Verfügbarkeit der Empfangsstation (B) durch die Sendestation (A) aufweist, wobei der Überprüfungsschritt (110) dem Schritt der Bestimmung der festen Frequenz voransteht.

4. Verfahren nach einem beliebigen der vorhergehenden Ansprüche, bei dem der Schritt (120) der Bestimmung der festen Frequenz das Senden eines Anrufwortes durch die Sendestation (A) an die Empfangsstation (B), dann das Senden eines Antwortwortes durch die Empfangsstation (B) an die Sendestation (A) umfasst, wobei das Anrufwort und das Antwortwort auf jeder Frequenz des zweiten Frequenzplans gesendet wird, wobei die bestimmte Frequenz die Frequenz ist, die die beste Empfangsqualität des Anrufworts und des Antwortworts aufweist.

5. Verfahren nach einem beliebigen der vorhergehenden Ansprüche, bei dem die Sendestation (A) Daten an die Empfangsstation (B) auf einer festen ersten Frequenz sendet und bei dem die Empfangsstation (B) Daten an die Sendestation (A) auf einer zweiten festen Frequenz sendet.

6. Verfahren nach den Ansprüchen 4 und 5 zusammengenommen, bei dem die erste feste Frequenz die Frequenz ist, die die beste Empfangsqualität des Anrufwortes aufweist, und die zweite feste Frequenz die Frequenz ist, die die beste Empfangsqualität des Antwortwortes aufweist.

7. Verfahren nach Anspruch 5 oder 6, bei dem die zweite feste Frequenz einen unterschiedlichen Wert zu dem der ersten festen Frequenz aufweist.

8. Verfahren nach Anspruch 5 oder 6, bei dem die zweite feste Frequenz einen identischen Wert zu dem der ersten festen Frequenz aufweist.

9. Verfahren nach einem beliebigen der vorhergehenden Ansprüche, bei dem der erste Übertragungsmodus eine erste maximale Übertragungsgeschwindigkeit aufweist und der zweite Übertragungsmodus eine zweite maximale Übertragungsgeschwindigkeit von einem Wert größer als der der ersten maximalen Übertragungsgeschwindigkeit aufweist.

10. Verfahren nach einem beliebigen der vorhergehenden Ansprüche, bei dem die Sendestation (A) und die Empfangsstation (B) bei Abschluss der Datenübertragung gemäß dem zweiten Übertragungsmodus automatisch in den ersten Übertragungsmodus zurückkehren.

11. Übertragungsnetz, das eine Vielzahl von Funkstationen (10) umfasst, wobei jede Station (10) einen Sender (22) und einen Empfänger (20) aufweist, jede Station (10) geeignet ist, Daten gemäß einem ersten Modus zu übertragen, bei dem das Netz im Frequenzsprungverfahren in einem ersten Frequenzplan arbeitet, wobei die für die Datenübertragung verwendete Frequenz während einer Frequenzsprungphase beibehalten wird und von einer Frequenzsprungphase zur anderen sich gemäß einem Frequenzänderungsgesetz ändert, wobei jede Station (10) geeignet ist, Daten in einem zweiten Frequenzplan gemäß einem zweiten Modus zu übertragen, bei dem eine Sendestation (A) einer Mehrzahl von Stationen (10) Daten auf einer festen Frequenz an eine Empfangsstation (B) sendet, wobei jede Station (10) Mittel zur Bestimmung der festen Frequenz aufweist und die Mittel zur Bestimmung geeignet sind, das Senden eines Testwortes auf jeder Frequenz des zweiten Frequenzplans während einer jeweiligen Testphase zu steuern,
**dadurch gekennzeichnet, dass** die Dauer der Testphase gleich der Dauer der Frequenzsprungphase multipliziert mit einem ganzzahligen Faktor ist, wobei der Wert des ganzzahligen Faktors zwischen 1 und 6 liegt.

## Claims

1. A method for transmitting data between a plurality of radio stations (10) of a same network, each station (10) comprising a transmitter (22) and a receiver (20), the method comprising:
- a first data transmission mode in which the network operates with frequency hopping (FH) in a first frequency plan, the frequency used for data transmission being maintained for a FH dwell time, and changing from one FH dwell time to the other according to a frequency change law,
- a second data transmission mode in a second frequency plan in which a transmitter station (A) from among the plurality of stations (10) transmits data on a fixed frequency to a receiver station (B) among the plurality of stations (10), the second mode comprising a determination step (120) to determine the fixed frequency, the determination step (120) comprising the transmission of a test word on each frequency of the second frequency plan during a respective test dwell time,
**characterized in that** the duration of the test dwell time is equal to the duration of the FH dwell time multiplied by an integer factor, the value of the integer factor being between 1 and 6.

2. The method according to claim 1, wherein the duration of the test dwell time is equal to the duration of the FH dwell time, the multiplying factor being 1.

3. The method according to claim 1 or 2, wherein the second data transmission mode also comprises a verification step (110) by the transmitter station (A) to verify the availability of the receiver station (B), the verification step (110) preceding the step to determine the fixed frequency.

4. The method according to any of preceding claims, wherein the fixed frequency determination step (120) comprises the transmitting of a call word by the transmitter station (A) to the receiver station (B), then the transmitting of a response word by the receiver station (B) to the transmitter station (A), the call word and the response word being transmitted on each frequency of the second frequency plan, the determined frequency being the frequency having the best quality of reception of the call word and of the response word.

5. The method according to any of the preceding claims, wherein the transmitter station (A) transmits data to the receiver station (B) on a first fixed frequency, and wherein the receiver station (B) transmits data to the transmitter station (A) on a second fixed frequency.

6. The method according to claims 4 and 5 taken together, wherein the first fixed frequency is the frequency having the best quality of reception of the call word, and the second fixed frequency is the frequency having the best quality of reception of the response word.

7. The method according to claim 5 or 6, wherein the second fixed frequency has a different value to the value of the first fixed frequency.

8. The method according to claim 5 or 6, wherein the second fixed frequency is of identical value to the value of the first fixed frequency.

9. The method according to any of the preceding claims, wherein the first transmission mode has a first maximum transmission rate, and the second transmission mode has a second maximum transmission rate of higher value than the value of the first maximum rate.

10. The method according to any of the preceding claims, wherein the transmitter station (A) and the receiver station (B) automatically return to the first transmission mode after the transmission of data in the second transmission mode.

11. A transmission network comprising a plurality of radio stations (10), each station (10) comprising a transmitter (22) and a receiver (20), each station (10) being capable of transmitting data in a first mode in which the network operates with frequency hopping in a first frequency plan, the frequency used for data transmission being maintained for a FH dwell time and changing from one FH dwell time to the other according to a frequency change law, each station (10) being capable of transmitting data in a second frequency plan according to a second mode in which a transmitter station (A) among the plurality of stations (10) transmits data on a fixed frequency to a receiver station (B), each station (10) comprising means for determining the fixed frequency, the determination means being capable of commanding the transmission of a test word on each frequency of the second frequency plan for a respective test dwell time,
**characterized in that** the test dwell time is equal to the FH dwell time multiplied by an integer factor, the value of the integer factor being between 1 and 6.
